# EUROPÄISCHE PATENTSCHRIFT

(11) **EP 1 792 762 B1**
(45) Veröffentlichungstag und Bekanntmachung des Hinweises auf die Patenterteilung: **06.06.2012**
(21) Anmeldenummer: 06124995.9
(22) Anmeldetag: 29.11.2006
(51) Int. Cl.: B60H 1/00, B61D 27/00, B61C 17/04

(54) **Einbau einer Kühlanlage in ein Schienenfahrzeug mit einem Führerraum, insbesondere einen Triebwagen**
Fitting a cooling unit in a rail vehicle with driver's cab, in particular a railcar
Montage d' un climatiseur dans un véhicule ferroviaire avec cabine de conduite, en particulier un autorail

(30) Priorität: 01.12.2005 DE 102005057541
(43) Veröffentlichungstag der Anmeldung: 06.06.2007
(73) Patentinhaber: SIEMENS AKTIENGESELLSCHAFT, 80333 München (DE)
(72) Erfinder: Gerstmeier, Theodor, 86609, Donauwörth (DE); Inagaki, Takako, 90425, Nürnberg (DE); Koenig, Udo, 48653, Coesfeld (DE); Mrugalla, Harry, 90547, Stein (DE)

(56) Entgegenhaltungen:
- EP-A2- 0 298 952
- DE-A1- 3 128 150
- DE-A1- 10 304 273
- DE-U1- 29 600 512
- US-A- 1 985 636
- US-A- 3 848 428

## Beschreibung

Die Erfindung betrifft ein Schienenfahrzeug mit einer Kühlanlage für Hauptkomponenten des Schienenfahrzeuges das einen Führerraum aufweist.

Bei als Triebzug ausgeführten Schienenfahrzeugen ist es gängige Praxis, große Hauptkomponenten unterflur oder in Maschinenräumen einzubauen. Zu solchen Hauptkomponenten gehören beispielsweise Traktionswechselrichter und Geräte der Klimaanlage. Der Kühlung von Hauptkomponenten dienende Anlagen werden in aller Regel in unmittelbarer Nähe der zugehörigen Hauptkomponente angeordnet.

Aus der US 1 985 636 A1 ist ein Schienenfahrzeug bekannt, bei dem Komponenten einer Klimatisierungsanlage von einem Boden des Schienenfahrzeugs aus bis in einen Dachbereich hinein vertikal übereinander angeordnet sind. Die Komponenten befinden sich in einem geringen Abstand zu einem Ende des Schienenfahrzeugs.

Aus der EP 0 298 952 A1 ist ein Führerstand eines Schienenfahrzeugs bekannt, der einen Einstiegsraum und eine Zwischendecke aufweist, die mit einer Führerstandsdecke einen Luftverteilraum bildet. In den Luftverteilraum strömt von einer entfernt gelegenen Klimaanlage geförderte Luft zur verteilung in dem Führerstand ein.

In der DE 296 00 512 U1 wird eine Heizungs- und Lüftungssystem für den Fahrerraum eines Schienenfahrzeugs beschrieben. Dieses System dient dazu, im Fahrerraum angenehme Klimatisierungsverhältnisse zu schaffen. Weiterhin ist dort offenbart, dass das System mit einem Kältesatz ausgerüstet werden kann, so dass eine Klimaanlage für den Fahrerraum des Fahrzeugs geschaffen wird. Diese Druckschrift geht nicht darauf ein, an welcher Stelle eine Kühlanlage für Hauptkomponenten des Schienenfahrzeugs unterzubringen wäre.

Der Erfindung liegt die Aufgabe zugrunde, bei einem Schienenfahrzeug einen Einbau der Kühlanlage zu schaffen, der einen guten Zugang zu dieser Anlage, eine Versorgung mehrerer Hauptkomponenten sowie einen sicheren Brandschutz ermöglicht.

Diese Aufgabe wird erfindungsgemäß dadurch gelöst, dass im Fahrzeugdach oberhalb des Führerraumes ein Einbauraum vorgesehen ist, in dem die Kühlanlage angeordnet ist und der als tragende Baugruppe in den Wagenkasten-Rohbau des Schienenfahrzeugs integriert ist.

Durch die Anordnung der Kühlanlage in einem Einbauraum, der sich oberhalb des Führerraumes im Fahrzeugdach befindet, wird eine zentrale Einbaulage dieser Komponente erreicht. Dadurch können beidseitig im oberen Seitenbereich des Wagenkastens platzierte Hauptkomponenten vorteilhaft durch eine gemeinsame Kühlanlage versorgt werden. Weiter günstig ergeben sich durch die gute Zugänglichkeit der Kühlanlage kurze Montagezeiten. Aus der Anordnung der Kühlanlage oberhalb des Fahrerraumes, also in einem Brandschutzbereich, resultieren ein erhöhter Brandschutz für den durch Fahrgäste nutzbaren Innenbereich des Fahrzeuges sowie eine akustische Verbesserung für diesen Innenbereich.

Um den Brandschutz für den Innenbereich des Fahrzeuges weiter zu verbessern, empfiehlt es sich, den Einbauraum der Kühlanlage als Brandschutzraum auszuführen.

Vorzugsweise sind im Einbauraum Materialien für das Abschirmen der von der Kühlanlage ausgehenden Magnetfelder angeordnet, wodurch ein wirksamer Schutz für den durch die Fahrgäste nutzbaren Innenbereich des Fahrzeuges erreicht wird.

Weiter ist vorgesehen, dass der Einbauraum als tragende Baugruppe in den Wagenkasten-Rohbau des Schienenfahrzeuges integriert ist.

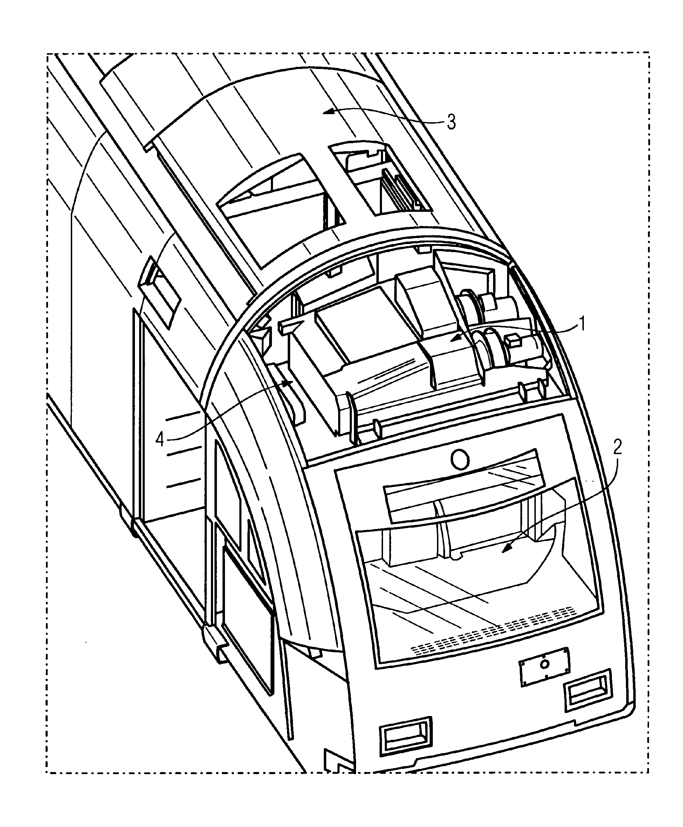

Ein Ausführungsbeispiel der Erfindung ist in der Zeichnung prinzipartig dargestellt und wird im Folgenden näher beschrieben. Die Zeichnung zeigt den Kopfbereich eines Schienenfahrzeuges, hier eines Triebwagenzuges, in perspektivischer Darstellung.

Der Triebwagenzug hat einen Führerraum 2. Oberhalb des Führerraumes 2 befindet sich im Fahrzeugdach 3 ein Einbauraum 4 für eine Kühlanlage 1. Der Einbauraum 4 ist als tragende Baugruppe in den Wagenkasten-Rohbau integriert und als Brandschutzraum ausgeführt. Im Einbauraum 4 sind Materialien für das Abschirmen der von der Kühlanlage 1 ausgehenden Magnetfelder angeordnet.

## Patentansprüche

1. Schienenfahrzeug, das einen Führerraum (2) aufweist sowie eine Kühlanlage (1) für Hauptkomponenten des Schienenfahrzeugs,
**dadurch gekennzeichnet, dass** im Fahrzeugdach (3) oberhalb des Führerraumes (2) ein Einbauraum (4) vorgesehen ist, in dem die Kühlanlage (1) angeordnet ist und der als tragende Baugruppe in den Wagenkasten-Rohbau des Schienenfahrzeugs integriert ist.

2. Schienenfahrzeug nach Anspruch 1, **dadurch gekennzeichnet, dass** der Einbauraum (4) als Brandschutzraum ausgeführt ist.

3. Schienenfahrzeug nach Anspruch 1 oder 2, **dadurch gekennzeichnet, dass** im Einbauraum (4) Materialien für das Abschirmen der von der Kühlanlage (1) ausgehenden Magnetfelder angeordnet sind.

## Claims

1. Rail vehicle which has a driver's cab (2) and a cooling system (1) for main components of the rail vehicle, **characterized in that** an installation space (4) in which the cooling system (1) is arranged and which is integrated as a load-bearing assembly into the wagon body shell of the rail vehicle is provided in the vehicle roof (3) above the driver's cab (2).

2. Rail vehicle according to Claim 1, **characterized in that** the installation space (4) is embodied as a fire protection room.

3. Rail vehicle according to Claim 1 or 2, **characterized in that** materials for screening the magnetic fields which originate from the cooling system (1) are arranged in the installation space (4).

## Revendications

1. Véhicule ferroviaire qui comporte une cabine ( 2 ) de conduite, ainsi qu'un système ( 1 ) de refroidissement des éléments principaux du véhicule ferroviaire,
**caractérisé en ce qu'**il est prévu dans le toit ( 3 ) du véhicule au dessus de la cabine ( 2 ) de conduite un espace ( 4 ) de montage, dans lequel le système ( 1 ) de refroidissement est placé et qui est intégré comme module porteur dans le chaudron du véhicule.

2. Véhicule ferroviaire suivant la revendication 1, **caractérisé en ce que** l'espace ( 4 ) de montage est réalisé en espace de protection vis-à-vis de l'incendie.

3. Véhicule ferroviaire suivant la revendication 1 ou 2, **caractérisé en ce que** dans l'espace ( 4 ) de montage sont placés des matériaux de blindage vis-à-vis des champs magnétiques provenant du système ( 1 ) de refroidissement.
